# EUROPEAN PATENT SPECIFICATION

(11) **EP 0 502 890 B1**
(45) Date of publication and mention of the grant of the patent: **14.09.1994**
(21) Application number: 90917240.5
(22) Date of filing: 26.11.1990
(51) Int. Cl.: E03C 1/086

(54) **A MOUTHPIECE FOR A WATER TAPPING POINT**
MUNDSTÜCK FÜR DAS AUSLAUFENDE EINES WASSERHAHNS
BEC POUR POINT DE PRISE D'EAU

(30) Priority: 27.11.1989 DK 5955/89
(43) Date of publication of application: 16.09.1992
(73) Proprietor: HVARRE, John Nikolaj, DK-2690 Karlslunde (DK)
(72) Inventor: HVARRE, John Nikolaj, DK-2690 Karlslunde (DK)
(86) International application number: DK9000307
(87) International publication number: WO9108354

(56) References cited:
- SE-A- 8 201 981
- SE-B- 459 581

## Description

The invention concerns a mouthpiece for a water tapping point, such as a water tap or a similar installation, and which accommodates a row of flow modifying elements so arranged as to impart, during tapping, to the outflowing water jet a desired preferably quietly regulated, non-splashing state of flow.

Mouthpieces of this type are used very extensively for for example water taps which are positioned at kitchen sinks or wash basins, where it would be inconvenient if the water was ejected as a hard jet splashing the surroundings when it hit the sink or basin or other objects present in the path of the water jet. To this end, these mouthpieces are provided with a specially constructed flow passage which, during tapping of water, increases the flow rate and thereby forms a negative pressure, which draws in atmospheric air via air gaps at the periphery of the mouth. When mixed with the water, this air imparts to the water its characteristic almost opal, sparkling, non-splashing state of outflow. This flow passage extends through a plurality of flow modifying elements of plastics and/or metal and is composed of many fine channels and gaps in which incrustation easily takes place, so that the water tap in question is made more or less inoperative. The respective mouthpiece must then be removed and immersed in a liquid containing various more or less toxic chemicals, and this process is both cumbersome and time-consuming and moreover involves a certain risk of the residue of chemicals, in spite of all safety measures, being entrained by water which is either drunk directly or used for cooking purposes.

Accordingly, the object of the invention is to provide a mouthpiece of the type mentioned in opening paragraph, which, without using chemicals or corresponding aids can automatically keep itself free of incrustation in operation.

This is achieved according to the invention in that the mouthpiece is characterized in that at least one of its flow modifying elements is made wholely or partly of a magnetic material. This causes a magnetic field to be formed in the flow passage of the mouthpiece which changes the state of the calcium carbonate in a manner known per se from one crystal form "aragonite", which has a very great tendency to settle as limestone on the surfaces surrounding the water, to another crystal form "calcite", which has lost this ability, so that the mouthpiece automatically keeps itself free of incrustation.

According to the invention, it is particularly advantageous when the flow modifying element made of the magnetic material is positioned at the foremost end of the element row as seen in the flow direction, since all flow modifying elements, i.e. also the elements made of plastics and/or metal, will then only touch water whose calcium carbonate content has changed its crystal form from "aragonite" to "calcite".

Moreover, in an advantageous embodiment of the invention, the magnetic flow modifying element may be made of a magnetizable ceramic material in the form of a disc having essentially the same outside diameter as the inside diameter of the mouthpiece and at least one flow modifying channel extending transversely through the disc.

According to the invention, this disc may also have a single, preferably centrally arranged flow modifying channel with a diameter of 10-30%, preferably 15-25% of the outside diameter of the disc, as well as a bevel or a rounding between the central hole of the disc and its plane side faces, so that the disc is axially spaced from the adjacent elements in the element row. This causes the water to pass most of the magnetic field, which can therefore optimally change the crystal form of the calcium carbonate to "calcite".

In another advantageous embodiment of the invention, the entire element row may additionally be formed as an integral unit consisting of magnetic material, thereby providing a particularly simple and inexpensive structure.

The invention will be explained more fully by the following description of an expedient embodiment with reference to the drawing, in which
fig. 1 is a lateral view of a mouth piece of the invention mounted on a water tap,
fig. 2 is an enlarged, exploded view of the mouthpiece shown in fig. 1,
fig. 3 is an axial section through the mouth piece.

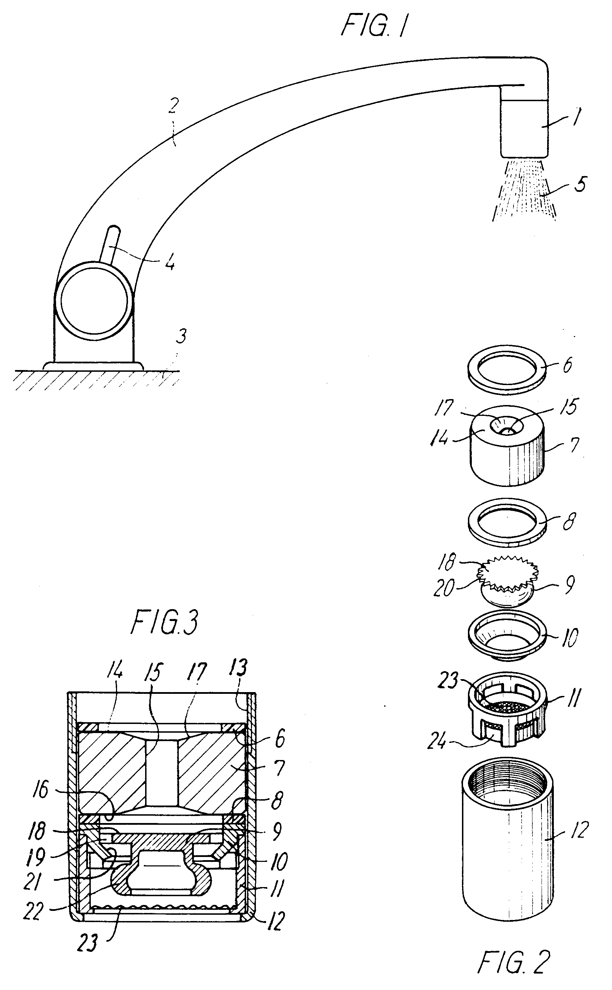

Fig. 1 shows a mouthpiece 1 which is mounted on a water tap 2 fitted on a table 3 and having an operating handle 4. The water tap 2 may be of any suitable structure. In the shown case, the water tap is open, and a water jet 5 is ejected from the mouthpiece 1.

Fig. 2 is an enlarged, exploded view of the various components of the mouthpiece, said components being in sequence from the top a first sealing ring 6, a first flow modifying element 7, a second sealing ring 8, a second flow modifying element 9, a third flow modifying element 10, a fourth flow modifying element 11, as well as casing 12.

These components 6-12 are shown in an assempled state in fig. 3, which shows how they form in combination a flow passage which the water has to follow before it can leave the mouthpiece 1. This is mounted on the water tap 2 by means of threads 13, the first sealing ring 6 hereby forming a seal between the mouthpiece and the water tap.

During the flow through the flow passage of the mouthpiece the water initially impinges on the upper side 14 of the first flow modifying element 7, then it runs via a central hole 15 in the element 7 down on the upper side 18 of the element 9, which again spreads the water outwardly to a plurality of fine cuts 20 (fig. 2) which are provided in the upper side 18 of the element 9 and serve to distribute the water evenly along its periphery before the water flows further on downwardly through a narrow gap 19 between the second and third elements 9, 10. The latter element 10 has a lower, downwardly converging ring face 21 directing the water beyond a ball surface 22 which is provided on the second element 9. The stream of water hereby assumes the shape of a tube, which flows with a very great rate with respect to the original flow rate further on down toward a net 23 and leaves the mouthpiece 1 via this net 23.

As known from Bernoulli's pressure equation for a potential flow field, the pressure in the water will be inversely proportional to the square of the rate of the water, and it will therefore readily be appreciated that, with the above-mentioned conditions, a negative pressure can easily be formed in the water flow which thereby draws in air via a plurality of air gaps 24 (fig. 2), which are positioned along the periphery of the fourth element 11.

The admitted air penetrates from the side into the tubular water flow, which is thereby subjected to a breaking action and is split up so that the water finally leaves the mouthpiece 1 via the net 23 as a soft, full jet filled with an infinitude of small, fine air bubbles imparting to the jet an opal appearance and reducing the tendency of splashing when the water hits an object.

The embodiment described above is just one of many structures which give the desired effect, but it is common to all embodiments that their flow passage consists of many channels and gaps which are so fine that incrustation takes place relatively quickly, thereby making the water tap completely or partly inoperative. When this state has occurred, the mouthpiece has to be screwed off and immersed in a solution of chemicals for many hours before the tap can be used again. This is cumbersome of course, and to this should be added that there will always be a certain risk of residues of chemicals, which have not been flushed completely, being entrained in drinking water or water for cooking when the tap is used again.

These drawbacks are remedied according to the invention by forming one or more flow modifying elements 6-12, which are made of plastics and/or metal in the conventional structures, of a magnetic material, i.e. a magnetizable ceramic material. Hereby, a magnetic field will be formed in the flow passage which the water has to pass on its way through the mouthpiece and which converts the calcium carbonate in the water in a manner known per se from the crystal form "aragonite", which easily settles as scales, to the crystal form "calcite" which does not have this property. This entails that the mouthpiece automatically keeps itself free of incrustation, without it being necessary to use chemicals in this connection.

In the embodiment shown in figs. 2 and 3 the flow modifying element 7 consists of a permanent magnetic material, and the magnetic field therefore occurs already at the inlet of the flow passage; the whole of the flow passage is thus kept free of incrustation, even though the subsequent flow modifying elements themselves are not made of a magnetic material.

In this case the magnetic flow modifying element 7 is provided as a disc with a central hole 15 which may have a diameter of 10-30%, preferably 15-25% of the outside diameter of the disc 7, which corresponds to the inside diameter of the casing 12, with a view to obtaining favourable flow conditions. The transition between the plane sides 14, 16 of the disc 7 is formed by a suitable bevel 17, and the disc is moreover spaced from the upper side 18 of the second element 9 by means of the second sealing ring 8, said second element 9 being moreover lowered slightly into the third element 10 to increase the distance additionally.

The above-mentioned structure entails that when the tap 2 is opened, the water will first meet the upper side 14 of the disc 7 guiding the water substantially perpendicularly to the lines of force of the magnetic field inwardly toward the central hole 15 of the disc, which has such a diameter that the water flows through the concentrated magnetic field in the central hole with strong turbulence, and then the water is again directed outwardly toward the periphery along the underside 16 of the disc 7 and likewise substantially perpendicularly to the lines of force of the magnetic field. This structure is particularly effective because the water will pass most of the magnetic field of force formed around the magnetic disc 7. This favourable effect is enhanced additionally by the turbulent flow, causing the individual water particles to travel a greatly increased distance during their passage of the disc 7.

An even better effect can be obtained when also some of the other flow modifying elements are made of a magnetic material, and the optimum effect is achieved when this applies to all the flow modifying elements. If the elements are made as an integral unit in this case, a particularly simple and inexpensive structure will be obtained at the same time.

## Claims

1. A mouthpiece for a water tapping point, such as a water tap or a similar installation, and which accommodates a row of flow modifying elements so arranged as to impart, during tapping, to the outflowing water jet a desired, preferably quietly regulated non-splashing state of flow, characterized in that at least one of these flow modifying elements is made wholely or partly of a magnetic material.

2. A mouthpiece according to claim 1, characterized in that the flow modifying element made of magnetic material is positioned in the front end of the element row as seen in the direction of flow.

3. A mouthpiece according to claim 1 or 2, characterized in that the flow modifying element made of magnetic material is formed as a disc having essentially the same outside diameter as the inside diameter of the mouthpiece and at least one flow modifying channel extending transversely through the disc.

4. A mouthpiece according to claim 3, characterized in that the disc has a single, preferably centrally positioned flow modifying channel with a diameter of 10-30%, preferably 15-25% of the outside diameter of the disc.

5. A mouthpiece according to claim 4, characterized in that a bevel or a rounding is provided between the central hole of the disc and its plane side faces.

6. A mouthpiece according to claim 3 or 4, characterized in that the disc is axially spaced from the adjacent elements in the element row.

7. A mouthpiece according to claim 1, characterized in that the element row is provided as an integral unit consisting of magnetic material.

8. A mouthpiece according to one or more of claims 1-7, characterized in that the magnetic material is a magnetizable ceramic material.

## Patentansprüche

1. Mundstück für eine Wasserzapfstelle, wie einen Wasserhahn oder eine ähnliche Installation, das eine Reihe von Strömungsbeeinflussungselementen aufweist, die derart angeordnet sind, um während des Anzapfens dem ausfliessenden Wasserstrahl einen gewünschten, vorzugsweise ruhig regulierten, nicht spritzenden Strömungszustand zu verleihen, dadurch gekennzeichnet, dass wenigstens eines dieser Strömungsbeeinflussungselemente ganz oder teilweise aus einem magnetischen Material hergestellt ist.

2. Mundstück gemäss Anspruch 1, dadurch gekennzeichnet, dass das aus magnetischem Material hergestellte Strömungsbeeinflussungselement in Strömungsrichtung gesehen am vorderen Ende der Elementenreihe angeordnet ist.

3. Mundstück gemäss Anspruch 1 oder 2, dadurch gekennzeichnet, dass das aus magnetischem Material hergestellte Strömungsbeeinflussungselement als Scheibe ausgebildet ist, deren Aussendurchmesser im wesentlichen gleich ist wie der Innendurchmesser des Mundstückes und die wenigstens einen quer durch die Scheibe verlaufenden Strömungsbeeinflussungskanal aufweist.

4. Mundstück gemäss Anspruch 3, dadurch gekennzeichnet, dass die Scheibe einen einzigen, vorzugsweise zentral angeordneten Strömungsbeeinflussungskanal mit einem Durchmesser von 10 - 30%, vorzugsweise 15 - 25%, des Aussendurchmessers der Scheibe aufweist.

5. Mundstück gemäss Anspruch 4, dadurch gekennzeichnet, dass zwischen dem zentralen Durchlass der Scheibe und deren ebenen Seitenflächen eine Abschrägung oder eine Abrundung vorgesehen ist.

6. Mundstück gemäss Anspruch 3 oder 4, dadurch gekennzeichnet, dass die Scheibe in axialer Richtung in einem Abstand vom benachbarten Element der Elementenreihe angeordnet ist.

7. Mundstück gemäss Anspruch 1, dadurch gekennzeichnet, dass die Elementenreihe als eine aus magnetischem Material bestehende Baueinheit ausgebildet ist.

8. Mundstück nach einem oder mehreren der Ansprüche 1 - 7, dadurch gekennzeichnet, dass das magnetische Material ein magnetisierbares Keramikmaterial ist.

## Revendications

1. Embout pour un dispositif d'où coule de l'eau, tel qu'un robinet d'eau ou une installation similaire, lequel embout reçoit une rangée d'éléments modifiant l'écoulement agencés pour que pendant le fonctionnement du dispositif, le filet d'eau qui en sort soit contrôlé de préférence pour assurer un écoulement régulé, en douceur et sans éclaboussures, caractérisé en ce qu'au moins un de ces éléments modifiant l'écoulement est fait entièrement ou partiellement en un matériau magnétique.

2. Embout selon la revendication 1, caractérisé en ce que l'élément modifiant l'écoulement fait en un matériau magnétique est Positionné à l'extrémité amont de la rangée d'éléments, lorsqu'on regarde dans la direction de l'écoulement.

3. Embout selon la revendication 1 ou 2, caractérisé en ce que l'élément modifiant l'écoulement fait en un matériau magnétique a la forme d'un disque ayant sensiblement le même diamètre externe que le diamètre interne de l'embout et au moins un canal modifiant l'écoulement traversant le disque.

4. Embout selon la revendication 3, caractérisé en ce que le disque a un seul canal modifiant l'écoulement, situé de préférence dans une position centrale et ayant un diamètre correspondant à 10-30% et de préférence à 15-25% du diamètre externe du disque.

5. Embout selon la revendication 4, caractérisé en ce qu'un biais ou un arrondi est prévu entre le trou central du disque et ses faces latérales planes.

6. Embout selon la revendication 3 ou 4, caractérisé en ce que le disque est espacé axialement de l'élément adjacent de la rangée d'éléments.

7. Embout selon la revendication 1, caractérisé en ce que la rangée d'éléments est réalisée comme une seule pièce constituée de matériau magnétique.

8. Embout selon une ou plusieurs des revendications 1-7, caractérisé en ce que le matériau magnétique est un matériau céramique magnétisable.
